(19) Europäisches Patentamt
European Patent Office
Office européen des brevets

(11) **EP 3 850 303 B1**

(12) **EUROPÄISCHE PATENTSCHRIFT**

(45) Veröffentlichungstag und Bekanntmachung des Hinweises auf die Patenterteilung:
**26.10.2022   Patentblatt 2022/43**

(21) Anmeldenummer: **19779743.4**

(22) Anmeldetag: **12.09.2019**

(51) Internationale Patentklassifikation (IPC):
***G01B 11/30*** *(2006.01)*

(52) Gemeinsame Patentklassifikation (CPC):
**G01B 11/30;** G01B 2210/52

(86) Internationale Anmeldenummer:
**PCT/DE2019/000238**

(87) Internationale Veröffentlichungsnummer:
**WO 2020/052700 (19.03.2020 Gazette 2020/12)**

(54) **VERFAHREN ZUR OPTISCHEN MAKRODRALLBESTIMMUNG AN ZYLINDRISCHEN WERKSTÜCKEN MIT HILFE VON STREULICHTMESSUNGEN**

METHOD FOR OPTICAL MACRO-TWIST DETERMINATION ON CYLINDRICAL WORKPIECES USING SCATTERED LIGHT MEASUREMENTS

PROCÉDÉ POUR LA DÉTERMINATION OPTIQUE D'UNE MACROTORSION SUR DES PIÈCES CYLINDRIQUES À L'AIDE DE MESURES DE LUMIÈRE DIFFUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2018   DE 102018007367**

(43) Veröffentlichungstag der Anmeldung:
**21.07.2021   Patentblatt 2021/29**

(73) Patentinhaber: **Innovent e.V.**
**07745 Jena (DE)**

(72) Erfinder:
• **HERTZSCH, Albrecht**
**07745 Jena (DE)**

• **KRÖGER, Knut**
**07745 Jena (DE)**

(74) Vertreter: **Pfeiffer, Rolf-Gerd**
**Patentanwaltsbüro**
**Pfeiffer & Kollegen**
**Engelplatz 11**
**07743 Jena (DE)**

(56) Entgegenhaltungen:
**WO-A1-00/22377      DE-A1- 10 027 449**

• **Y. Y. FAN ET AL: "Light scattering from periodic rough cylindrical surfaces", APPLIED OPTICS, Bd. 32, Nr. 19, 1. Juli 1993 (1993-07-01), Seite 3452, XP055644148, WASHINGTON, DC; US ISSN: 0003-6935, DOI: 10.1364/AO.32.003452**

EP 3 850 303 B1

**Beschreibung**

Um die Dichtung einer drehenden Welle ohne Leckage oder Trockenlaufen sicherzustellen, muss die Wellenoberfläche im Dichtungsbereich drallfrei sein. Drall ist eine Textur der Oberflächenrauheit, die beim Makrodrall als Welligkeit die Rauheit der Wellenoberfläche wie eine Schraubenstruktur überlagert. Bei Rotation der Welle kommt es zu einem Öltransport. Makrodrall ist der häufigste Bearbeitungsfehler beim Einstichschleifen und Rollieren von Dichtungsgegenlaufflächen und entsteht bei schlechten Abrichtungsbedingungen der Schleifscheibe oder ungenügendem Abtrag von Vorbearbeitungsspuren (z.B. Drehriefen). Zur Qualitätsprüfung auf Drallfreiheit solcher Wellenoberflächen findet man im Stand der Technik Verfahren, die Makrodrall nur bei gleichmäßiger Ausprägung über den Umfang der Welle mit hohen Messzeiten erkennen [vgl. Mercedes Benz Werksnorm MBN 31007-7; 2009-04. Oberflächenbeschaffenheit - Mess- und Auswerteverfahren zur Bewertung von drallreduzierten dynamischen Dichtflächen], die Makrodrallstrukturen angeben ohne die Möglichkeit der Drallwinkelbestimmung [vgl. Hertzsch, A., Kröger,K., Großmann,M.: Schnelle optische Drallmessung. Tm 12/2013. S.429-434] oder die stark streuenden Prüfbedingungen und einer Vielzahl unterschiedlicher Werksnormen unterliegen und oftmals nur zu einer eingeschränkten Reproduzierbarkeit führen, wie bei den bekannten Fadenlaufmethoden.

Die Fadenlaufmethode ist die in der Praxis am weitesten verbreitete Prüfmethode. Die Prüfwelle wird in einer Drehvorrichtung in einem Futter oder zwischen Spitzen gehaltert, so dass die Achse der Welle horizontal ausgerichtet ist. Ein dünner Faden z.B. aus Baumwolle oder Nylon mit einem Fadendurchmesser von ca. $100\mu$m wird mit einem Gewicht beschwert und über den zu prüfenden Wellensitz gehängt. Dabei sollte der Faden eine solche Länge besitzen, dass er mindestens 200° des Wellenumfangs anliegend umschließt. Die Welle wird nun gleichförmig gedreht und es wird visuell geprüft, ob die drehende Welle den Faden in Achsrichtung transportiert. Anschließend wird der Test mit geänderter Drehrichtung der Welle wiederholt. Existiert eine Drallstruktur auf der Wellenoberfläche, wird der Faden, abhängig von der Drehrichtung, in Achsrichtung hin und zurück auf der Wellenoberfläche bewegt. Je größer die Wegverschiebung, umso höher ist der Drallwinkel der Struktur. Die Prüfung wird je nach Werksnorm mit trockener Wellenoberfläche oder mit ölbenetzter Oberfläche durchgeführt. Fäden aus unterschiedlichem Material führen zu unterschiedlichen Prüfergebnissen. Die Prüfbedingungen lassen sich praxisnah schwer reproduzierbar gestalten. Die Fadenmethode ermöglicht keinerlei Rückschlüsse über die Art und die Ausprägung des Dralls. Sie lässt sich nicht automatisieren.

Ein weiteres Verfahren zur Makrodrallprüfung ist die zweidimensionale Profilometrie. Mit Hilfe von Formprüfgeräten mit taktilem oder optischem Messkopf werden hoch aufgelöste Profilschriebe in Achsrichtung der Prüfwelle gemessen. Die Welle wird mit einem Goniometertisch um die Wellenachse in definierten Winkelschritten gedreht und für jede Winkelposition eine Profilmessung in Achsrichtung durchgeführt. Mit Hilfe dieser Profilschriebe wird eine dreidimensionale Topographie der Oberfläche gewonnen. Gemäß einer häufig verwendeten Norm [Mercedes Benz Werksnorm MBN 31007-7; 2009-04. Oberflächenbeschaffenheit - Mess- und Auswerteverfahren zur Bewertung von drallreduzierten dynamischen Dichtflächen] betragen die Längen der Profilschriebe in Achsrichtung 2mm und die Anzahl der Schriebe für eine volle Umdrehung 72. Um auch kleinere Strukturen besser auflösen zu können, kann diese Drallmessung für einen Umfangswinkelbereich von 36° in 0.5° Schritten wiederholt werden. Die so gemessenen 2-dimensonalen Topographiedaten werden mit einem standardisierten Filterverfahren auf dominante Welligkeiten und Riefenstrukturen analysiert. Die Hauptdominante wird als Drallstruktur gefiltert und hinsichtlich Tiefe, Texturwinkel und laterale Ausdehnung bewertet (vgl. DE 19740141 C1). Dieses Verfahren arbeitet mit zwei sehr unterschiedlichen lateralen Auflösungsgrenzen. Wird in Achsrichtung mit einer sehr hohen lateralen Auflösung von 500nm gemessen, ist die Auflösung in Umfangsrichtung um Faktor 1000 bis 10.000 niedriger. Mit diesem Verfahren können nur sehr langwellige, über den Gesamtumfang ausgeprägte Drallstrukturen analysiert werden. Zudem ist die Messzeit mit ca. 45min relativ hoch, was eine Inprocess-Messung mit diesem Verfahren unmöglich macht. Versuche, das Verfahren zu beschleunigen (vgl. EP 2383541A1), eignen sich nur für stark ausgeprägte, den Gesamtumfang umlaufende Makrodrallstrukturen.

Ein optisches Prüfverfahren zur Makrodrallkontrolle an zylindrischen Außendurchmessern von Wellen ist in DE10027439 B4 und DE 10050203 C1 beschrieben. Dabei wird die Welle in Umfangsrichtung mit streifend einfallendem kohärentem Licht beleuchtet. Existiert auf der rauen Oberfläche eine zur Rauheit langwellige periodische Struktur, so entsteht eine Beugungsfigur ähnlich der Beugung an einem eindimensionalen Gitter. Da das Gitter quasi in Riefenrichtung streifend beleuchtet wird, liegen die Beugungsextrema auf einem Kreis, der senkrecht zur Einfallsebene des Lichts steht. Deshalb spricht man in diesem Fall von konischer Beugung. Zudem ist die Wellenoberfläche in Richtung Einfallsebene gekrümmt, so dass das kollimiert einfallende Lichtbündel in Einfallsrichtung divergiert. Das an der Prüflingsoberfläche reflektierte Licht bildet nun eine Lichtlinie und bei Vorhandensein einer Drallstruktur entsteht eine streifenförmige Beugungsfigur. Durch den streifenden Einfall des Laserlichts werden langwellige periodische Oberflächenanteile verstärkt zur Beugung angeregt, während die Lichtstreuung an den Rauheitsstrukturen durch Abschattung und Mehrfachstreueffekte innerhalb der reflektierten Streulichtverteilung gedämpft wird.

Anhand der Beugungsfigur lassen sich weiterhin die Drallparameter Dralltiefe und Periodenlänge der Drallstruktur berechnen. So erhält man aus dem Abstand der Beugungsmaxima zueinander über die Gittergleichung die Periodenlänge der Drallstruktur (vgl.

WO 0022377 A1, DE 10027439 B4). Die Dralltiefe kann anhand des Intensitätsverhältnisses der Beugungsmaxima zueinander abgeschätzt (WO 0022377 A1) bzw. bei konischer Beugung berechnet werden (DE 10027439 B4). Ein wesentlicher Drallparameter, der für die Ölförderwirkung bei Drall verantwortlich ist, der Drallwinkel, kann jedoch mit diesem Verfahren nicht nachgewiesen werden.

Aus DE 100 27 449 A1 ist ein Verfahren zur optischen Makrodrallbestimmung an zylindrischen Werkstücken mit Hilfe von Streulichtmessungen, wobei das Werkstück in einem vorgebbaren Oberflächenbereich senkrecht zur Rotationsachse streifend mit einem Lichtstrahl beleuchtet wird, bekannt. Mit Hilfe dieses Vorschlags sind jedoch nur qualitative Aussagen über die Periodenlänge der Drallstruktur ermittelbar. Aussagen über die Gängigkeit und den Drallwinkel sind mit diesem Vorschlag ebenfalls nicht ermittelbar.

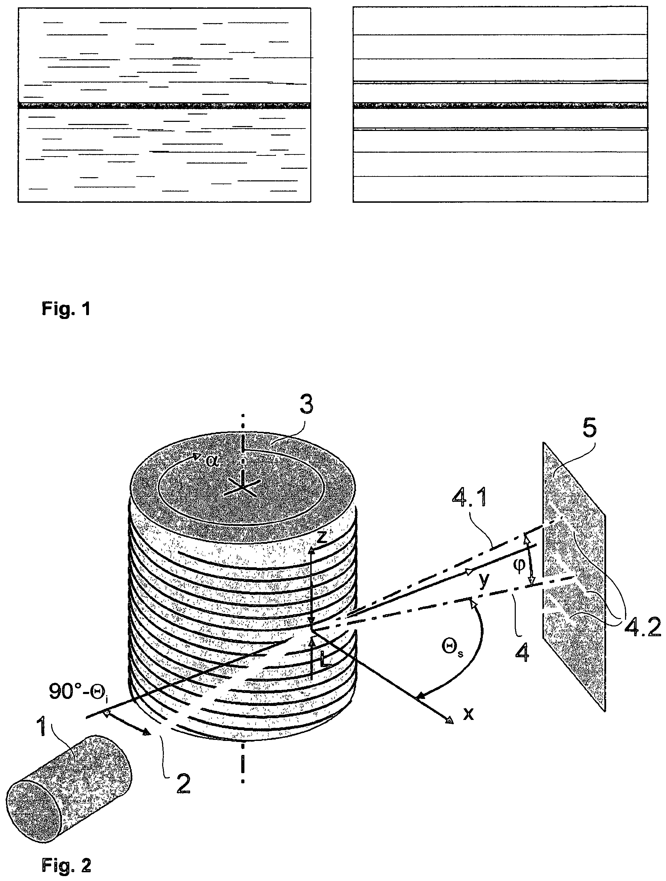

Zudem können Drallstrukturen über den Umfang von geschliffenen Wellen stark variieren. Die Ortsabhängigkeit resultiert aus der unterschiedlichen Ausprägung von Rauheit und Welligkeit. Die durchgehende Periodizität der Drallstrukturen wird z.B. bei zusätzlich auftretenden Rattermarken auf der Wellenoberfläche (worunter eine Facettenbildung in Umfangsrichtung zu verstehen ist) gestört und verzerrt. Die Mikrostruktur der Schleifriefen kann sich in Umfangsrichtung periodisch verändern. Trotz der global gestörten Drallstruktur können die lokal ungestörten Bereiche des Dralls zu Undichtheit führen. Je nach Signal-Rausch-Verhältnis ist die reflektierte Streulichtverteilung der Wellenoberfläche dann entweder durch Speckleeffekte oder durch Beugungserscheinungen stärker geprägt. Besonders wenn die Dralltiefe klein ist und/oder die Periodenlänge der Drallstruktur groß, können die Beugungsstreifen durch die überlagerten Speckleeffekte nahezu ausgelöscht werden. Es ist in solchen Fällen sehr schwierig, anhand einzelner Streulichtbilder eine klare Aussage zur Drallfreiheit der Wellenoberfläche zu treffen. Jedoch ist es möglich, das optische Prüfergebnis zu stabilisieren, wie in "Hertzsch, A., Kröger,K., Großmann,M.: Schnelle optische Drallmessung. Tm 12/2013. S.429-434" beschrieben. Dreht sich die Welle während der optischen Prüfung mit streifendem Laserlichteinfall, mitteln sich alle stochastischen Streuerscheinungen aus. Abhängig von der lokalen Oberflächenrauheit ändern sich Ort und Intensität des Interferenzmusters. Die Addition mehrerer solcher Speckleverteilungen führt somit zu einer kontrastarmen niederfrequenten Lichtverteilung. Andererseits fallen die Beugungsmaxima und -minima der gestörten Drallstruktur immer in die gleichen Raumwinkelbereiche. Durch Überlagerung mehrerer gestörter Beugungsmuster einer Drallstruktur erhöhen sich die Linienschärfe und der Kontrast der Beugungsstreifen. Dieser einfache optische Filterprozess ist in Figur 1 schematisch dargestellt. Eine geschliffene Wellenoberfläche (siehe Fig. 2) wird streifend in Umfangsrichtung (z.B. mit einem Einfallswinkel $\Theta_i$=80°) mit einem Laser beleuchtet. Eine Kamera 5 erfasst das von der Oberfläche reflektierte Streulicht in einem kleinen Raumwinkelbereich mit einem Öffnungswinkel von ca. ±2° in azimutaler Richtung φ und in Streuwinkelrichtung $\Theta_s$ um den direkten Reflex. Die Streulichtverteilung wird durch lokal variierende streifenförmige Specklemuster dominiert, wie es in Fig 1 auf der linken Seite skizziert ist. Beugungsstreifen sind nicht eindeutig zu identifizieren. Auf der rechten Seite von Figur 1 ist ein gemitteltes Streulichtbild dargestellt, dass aus der Überlagerung vieler Einzelbilder resultiert, die bei rotierender Welle in einem Winkelsektor von z.B. 36° aufgenommen wurden. Beugungsstreifen prägen nun diese Streulichtverteilung. Neben der intensitätsstarken Reflexionslinie bei φ=0° sind symmetrisch quasi gleich beabstandende Beugungslinien beidseitig zur Reflexionslinie angeordnet. Das Specklemuster ist stark reduziert. Anhand des gemittelten Streulichtbildes können bei Vorhandensein von periodischen Drallstrukturen auch auf stark ortsabhängigen Oberflächen deutlich Beugungsstreifen verstärkt abgebildet und somit Drall auf der Wellenoberfläche nachgewiesen werden. Um globale Drallparameter über den Gesamtumfang der Welle zu ermitteln, ist es notwendig, die Welle während der optischen Drallprüfung eine ganze Umdrehung rotieren zu lassen. Die besten Ergebnisse werden erreicht, wenn die Welle in einem Backenfutter oder zwischen Spitzen aufgenommen wird und ein motorisierter Drehtisch eine präzise und stabile Wellendrehung realisiert. Die Ortsabhängigkeit der Streulichtbilder wird mit einer Messkamera bei fester Winkelschrittweite für eine Umdrehung der Welle erfasst. Durch Überlagerung der gemessenen Bilder sind somit Drallstrukturen nachweisbar, die lokal stark gestört oder sehr schwach ausgeprägt sind. Jedoch kann mit diesem Verfahren nicht der Anstieg der Drallstruktur, worunter der Drallwinkel verstanden wird, bestimmt werden.

Aufgabe vorliegender Erfindung ist es, ein Verfahren anzugeben, das Makrodrall auf Wellen sicher erfasst und bewerten lässt und schnelle Prüfergebnisse unter fertigungsnahen Bedingungen liefert, wobei sämtliche relevanten Drallparameter mit diesem Verfahren gewonnen werden.

Die Aufgabe wird durch die Merkmale des Anspruchs 1 gelöst. Vorteilhafte Ausgestaltungen sind Gegenstand der nachgeordneten Ansprüche.

Die Erfindung soll nachstehend anhand spezieller Ausführungsbeispiele näher erläutert werden. Es zeigen:

Fig. 1 beispielhafte Beugungsbilder nach dem bekannten Stand der Technik;
Fig. 2 eine beispielhafte Anordnung eines Streulichtmessverfahrens nach dem bekannten Stand der Technik;

Fig. 3 schematisch die Gewinnung einzelner Streulichtbilder nach vorliegender Erfindung;

Fig. 4 die Art der Bildung eines Überlappungsbereichs zwei benachbarter Streulichtbilder nach vorliegender Erfindung;

Fig. 5 auf der linken Seite eine über 360° Wellendrehung nach Fig. 4 gebildete Gesamtstreulichtverteilung mit einer Intensitätsmodulation der $\pm 1$. Beugungsordnungen der Wellenzahl 22 und auf der rechten Seite die zugehörige mittlere Intensitätsverteilung in Azimutwinkelrichtung $\varphi$, die durch Mittelung der Gesamtstreulichtverteilung in Drehwinkelrichtung $\alpha$ entsteht;

Fig. 6 auf der linken Seite schematisch einen Wellenabschnitt mit einer 5-gängigen Drallstruktur und auf der rechten Seite einen zugehörigen Ausschnitt der abgerollten Zylindermantelfläche;

Fig. 6a eine Gesamtstreulichtverteilung, die als Streulichtmessergebnis der Welle nach Fig. 6 entsteht und

Fig. 7 schematisch vier Fouriertransformationen unterschiedlicher Gesamtstreulichtverteilungen, die charakteristische Texturen bei unterschiedlichen Bearbeitungsverfahren abbilden a) Einstichschleifen, b) Durchgangsschleifen, c) Pendelschleifen und d) Bürstenschleifen und

Fig. 8 zeigt als inversen Grauwertplot den Verlauf einer beispielhaften Reflexionsgradlinie für eine zusammengesetzte Gesamtstreulichtverteilung, wenn die Welle einen Taumel während der Messung aufweist.

Basierend auf dem bekannten optischen Streulichtmessverfahren gemäß der Figuren 1 und 2 bei streifendem Laserlichteinfall wird nachstehend das erfindungsgemäße Verfahren beschrieben, das anhand von Streulichtbildern in kurzer Messzeit (<1 min) alle wesentlichen Makrodrallparameter bestimmen lässt.

Dazu werden zunächst die Beugungsbilder nach dem oben beschriebenen Streulichtverfahren (Stand der Technik) für den Gesamtumfang des Prüflings gemessen. Ein Laser 1 beleuchtet mit einem kohärenten Lichtbündel 2 das zylindrische Werkstück 3 streifend in Umfangsrichtung (vgl. Figur 2) mit einem Einfallswinkel $\Theta_i$. Das reflektiert gestreute Licht 4 wird im Raumwinkelbereich des direkten Reflexes winkelaufgelöst mit einer 2-dimensionalen Kamera, respektive CCD-Array 5 erfasst. Dabei ist die Kamera vorteilhaft so ausgerichtet, das der Richtungsvektor des direkten Reflexes 4 ($\Theta_s = \Theta_i$) die Kamerasensorfläche 5 mittig beleuchtet und die Einfallsebene (aufgespannt von Richtungsvektor des Beleuchtungslichtbündels und der Oberflächennormale des zylindrischen Werkstücks am Beleuchtungsort) parallel zu einer Achse des CCD-Arrays ausgerichtet ist. Der gemessene Raumwinkelbereich wird somit in der senkrecht zur Einfallsebene liegenden Achsrichtung z durch den Öffnungswinkel $\pm \varphi$ beschrieben und innerhalb der Einfallsebene durch den Streuwinkelbereich

$\Theta_s = \Theta_i \pm \Delta\Theta_s$. Die Absolutwerte von $\varphi$ und $\Delta\Theta_s$ betragen im Beispiel 2° bis 4°. Existiert auf dem zylindrischen Werkstück 3 eine Makrodrallstruktur, so entsteht auf der Bildebene 5 der Kamera ein streifenförmiges Beugungsmuster 4.2. Der Abstand einer Beugungsordnung 4.1 wird durch den Winkel $\varphi$ erfasst.

Für eine vollständige Messung wird die Prüfwelle um die eigene Achse mit dem Winkel $\alpha = 360°$ gedreht. Hier setzt vorliegende Erfindung an, indem die pro Drehwinkelschritt ermittelten Streulichtbilder, im Gegensatz zu dem bis dahin bekannten Stand der Technik, nicht überlagert, sondern winkeltreu zu einer 360° Gesamtstreulichtverteilung panoramaartig zusammengesetzt werden.

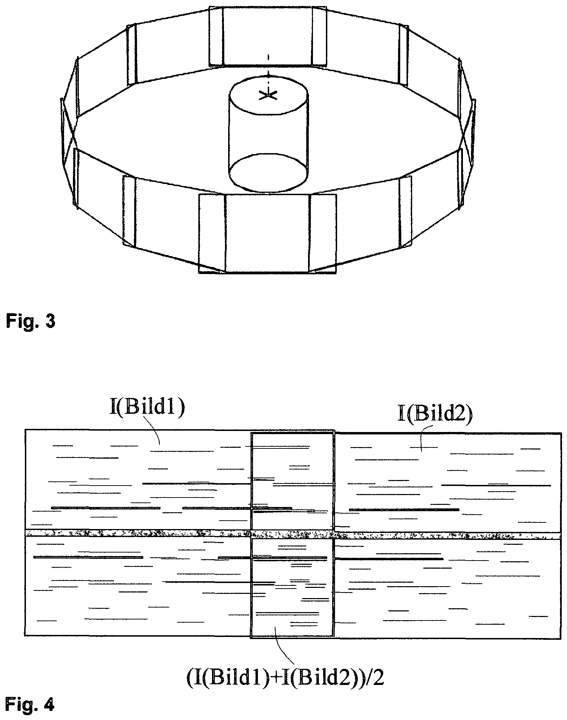

Figur 3 zeigt schematisch, dass sich eine solche 360° Gesamtstreulichtverteilung aus einer definierten Anzahl von Einzelbildern zusammensetzt, die in Umfangsrichtung lückenlos das Streulicht von einem geschlossen beleuchteten Achsabschnitt des zylindrischen Werkstücks abbilden. Dazu werden die Einzelbilder bei entsprechender Winkelzustellung $\Delta\alpha$ nahtlos oder mit einem Überlappbereich (vgl. Fig. 4) zu der 360° Gesamtstreulichtverteilung panoramaartig aneinandergereiht. Wird die Prüfwelle um den Winkel $\Delta\alpha$ gedreht, so verschiebt sich das Streulichtbild nach dem Reflexionsgesetz um $2\Delta\alpha$. Voraussetzung für die Erstellung einer 360° Gesamtstreulichtverteilung ist, dass die Drehwinkelschrittweite $\Delta\alpha$ kleiner/gleich der halben Kameraapertur ist und der beleuchtete Oberflächenbereich nach Winkeldrehung $\Delta\alpha$ an den vorangegangenen beleuchteten Oberflächenbereich direkt anschließt oder diesen überlappt. Mit diesem Vorgehen wird sichergestellt, dass die gemessenen Kamerabilder bei einer vollen Prüfteilumdrehung auch die Lichtstreuung der geschlossenen Umfangsfläche erfassen.

Für Wellen mit sehr großen Radien ($R > L/(2\cos(\Theta_i)\tan(\Delta\Theta_s/2))$), wobei L der Spotdurchmesser des Beleuchtungsstrahlenbündels 4 auf der Wellenoberfläche 3 ist (vgl. Fig.2), wird die notwendige Winkelschrittweite durch das beleuchtete Oberflächengebiet vorgegeben und beträgt $\Delta\alpha < atan(L/(R\cos(\Theta_i)))$. Auch für diesen Fall ist zu gewährleisten, dass die Winkelschrittweite $\Delta\alpha$ so gewählt ist, dass sich die Bildinformation in benachbarten Bildern direkt anschließt bzw. in einem Bildbereich überlagert und eine geschlossene Bildzusammensetzung in Drehrichtung wie oben beschrieben ermöglicht wird.

Führt die Winkelschrittweite $\Delta\alpha$ bei Bildung einer 360° Gesamtstreulichtverteilung zu überlappenden Bildbereichen, so wird erfindungsgemäß innerhalb dieser Überlappbereiche jeweils ein mittleres Streulichtbild aus den beiden Bildinformationen gebildet, um einen stetigen Intensitäts- und Musterübergang von Bild zu Bild zu gewährleisten (vgl. Fig. 4). Zur besseren Veranschaulichung sind die beiden benachbarten Bilder in Fig. 4 in der Höhe leicht versetzt dargestellt, um identische Bildbereiche im Überlappungsbereich zu erkennen.

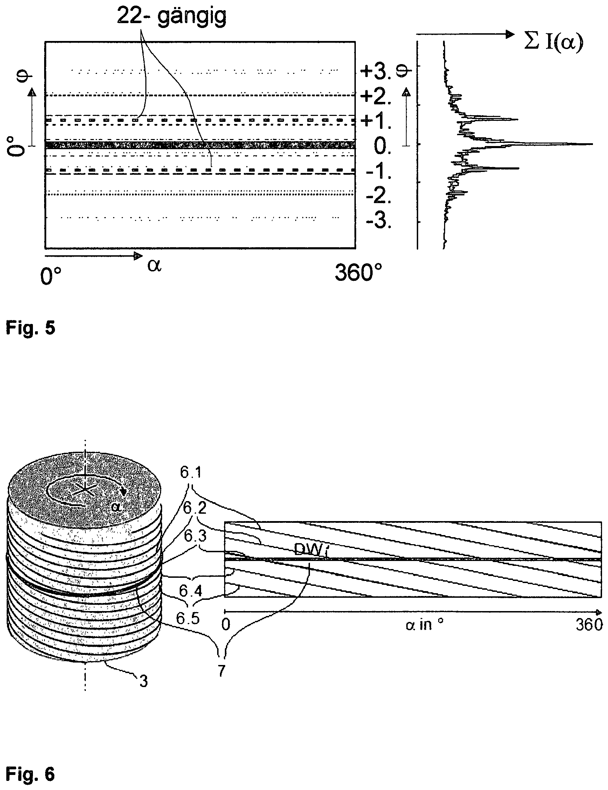

Die erfindungsgemäß gewonnene Gesamtstreulichtverteilung, bspw. für eine Getriebewelle, ist beispielhaft in Figur 5 (linker Teil) als inverser Grauwertplot dargestellt. Schwarze Bildbereiche repräsentieren hohe Streuintensitäten. Das Bild setzt sich im speziellen Beispiel aus 500 Einzelbildern zusammen, die in oben beschriebener Weise panoramaartig zusammengefügt wurden. Deutlich sind die intensitätsstarke Reflexions-slinie (bzw. Beugungslinie 0-ter Ordnung) und zwei Beugungslinien 1-ter Ordnung zu erkennen. Die Beugungslinien 2-ter Ordnung lassen sich ebenfalls schwach nachweisen. Zur automatischen Beugungsmustererken-nung kommen nun einfache Bildverarbeitungsalgorith-men zum Einsatz. Dazu wird über die 360° Gesamtstreulichtverteilung die Zeilensumme, worunter die Aufsummierung der Streulichtintensitäten über den Drehwinkel $\alpha$ zu verstehen ist, gebildet. In Fig. 5 repräsentieren die Strichstärken die Streulichtintensität. Die sich nun anschließende Bildung der horizontalen Zeilensumme des Gesamtstreulichtbildes führt zu einem Intensitätsprofil, das ausschließlich die Lichtverteilung in Achsrichtung ($\varphi$-Richtung) abbildet (vgl. Fig. 5 rechten Kurvenverlauf). Anhand dieser summarischen Intensitätsverteilung wird getestet, ob ein Beugungsmuster und somit eine Makrodrallstruktur auf der Oberfläche nachzuweisen ist. Die Lage und die Ausprägung der lokalen Maxima innerhalb der Kurve sind die Entscheidungskriterien dafür. Ist die Kurve durch symmetrische quasi gleich beabstandete Intensitätsmaxima geprägt (wie in Fig. 5 in Höhe der Beugungsordnungen ersichtlich) ist eine Drallstruktur vorhanden. Die zugehörigen Winkel $\varphi_m$ dieser Inten-sitätsmaxima beschreiben dann die Lage der m-Beugungsmaxima nach der konischen Beugungsgleichung [wie bspw. in "Y. Fan: Light scattering from periodic surfaces and turned surface roughness measurement. Ph.D. dissertation, University of Windsor, Windsor, 1992" beschrieben. Die Periodenlänge DP in Achsrichtung der Drallstruktur für die beleuchtete Mantelfläche des zylindrischen Werkstücks berechnet sich wie folgt:

$$DP = \frac{m\lambda}{\sin\Theta_i \tan\varphi_m}, \qquad (1)$$

wobei m die Beugungsordnung, $\lambda$ die Wellenlänge des einfallenden Lichts und $\Theta_i$ der Einfallswinkel sind. Nach Gleichung (1) wird deutlich, dass die Streulichtverteilung in Achsrichtung eine Frequenzverteilung abbildet. Je kleiner der Azimutstreuwinkel $\varphi_m$ ist, umso größer ist die Periodenlänge DP.

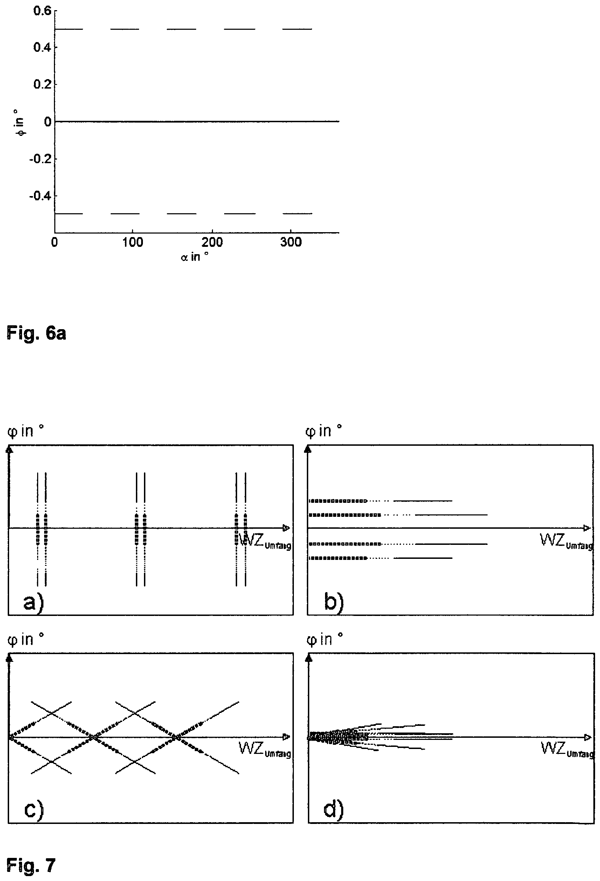

Sind durch die Beugungsmustererkennung die Winkel $\varphi_m$ der Beugungsordnungen m bekannt, so lassen sich in der 360° Gesamtstreulichtverteilung diesen $\varphi_m$-Winkeln definierte horizontale Bildzeilen zuordnen. Die Intensitätsmodulation dieser Zeilen über den Dreh-winkel $\alpha$ bildet die Gängigkeit der Oberflächendrallstruktur ab. Die Gesamtstreulichtverteilung in Umfangsrich-tung $\alpha$ folgt im Wesentlichen dem geometrisch-optischen Modell aufgrund der großen Beleuchtungsausdehnung und der langwelligeren Rauheitsstruktur in Umfangsrichtung. So wird in Fig. 5 durch die gestrichelte Linie schematisch verdeutlicht, dass die Beugungslinien der 1. Ordnungen durch eine Periodizität mit der Wellenzahl 22 gekennzeichnet sind. Die Entstehung dieser Periodizität wird anhand der Figuren 6 und 6a diskutiert. Besitzt die Welle 3 eine mehrgängige Drallstruktur (vgl. in Fig. 6 die fünf Gänge 6.1...6.5), so schneidet eine kreisförmige Messbahn 7 für eine volle Umdrehung von $\alpha$=360° jeden einzelnen Drallgang einmal. Die Messbahn erfasst somit die Drallstruktur als eine eindimensionale Welligkeit. Diese Welligkeit moduliert die Streulichtintensität bei streifendem Lichteinfall nach Fig.2 bei Rotation der Welle 3 um $\alpha$ nach dem Reflexionsgesetz. Die Anzahl der Welligkeitsperioden für eine Umdrehung, die als Gängigkeit bzw. Anzahl der Spiralen G bezeichnet wird, ist abhängig vom Anstieg DW und der Periodenlänge DP der Drallstruktur 6.1...6.5.. Für das in Fig. 6 dargestellte Beispiel schneidet die kreisförmige Messbahn die Drallstruktur in fünf Punkten. Die Intensitäten der ersten Beugungsordnungen für die erfindungsgemäß ermittelte Gesamtstreulichtverteilung sind für das Beispiel sinusförmig moduliert mit fünf Perioden, die somit die Gängigkeit der Drallstruktur G=5 anzeigen (vgl. Fig. 6a). Ist der Durchmesser der Welle 3 bekannt und die Periodenlänge der Drallstruktur DP aus der Winkellage der Beugungsstreifen (gemäß Gleichung (1) ermittelt), so kann der Drallwinkel DW aus der Gängigkeit G wie folgt berechnet werden:

$$DW = a\tan\left(\frac{DP * G}{D * \pi}\right). \qquad (2)$$

Bildet man für die Intensitätsverteilungen der 1. Beugungsordnungen als Funktion des Drehwinkels $\alpha$ die Fouriertransformierten, so sind diese beiden Fouriertransformierten bei periodischer Modulierung durch jeweils ein Maximum geprägt, dessen Lage die Wellenzahl in Umfangsrichtung und somit die Gängigkeit der Drallstruktur angibt. Mit Hilfe einer Maximumsuche bei diesen Fouriertransformierten kann automatisch die Gängigkeit und daraus nach Gleichung (2) der Drallwinkel berechnet werden.

Die Tiefe der Drallstruktur Dt wird anhand der Intensitätsverteilung des Streulichts in $\varphi$-Richtung bes-timmt (vgl. Fig.5, rechte Seite). Für jeden Drehwinkel $\alpha_n$ lässt sich aus der Gesamtstreulichtverteilung eine zuge-hörige Streulichtverteilung I($\varphi$) extrahieren. Dabei besch-reibt nun die Intensitätsverteilung für einen bestimmten Winkel $\alpha_n$ die Tiefe des Dralls für diesen beleuchteten Umfangsbereich der Welle. Für diese lokale Streulich-tverteilung I($\alpha_n$, $\varphi$) werden die Intensitätswerte an den Orten der Beugungsordnungen (vgl. Fig. 5) bestimmt und mit einem Beugungsmodell angefittet. Der als eindimensionales Gitter genäherte Drall liefert durch diese Beugungssimulation die zugehörige Dralltiefe. Die detaillierte Vorgehensweise ist u.a. in [Hertzsch,A., Kröger,K.,

Großmann,M.: Schnelle optische Drallmessung. Tm 12/2013. S.429-434] beschrieben. Auf Grundlage dieses Vorgehens lassen sich die Dralltiefen als Funktion des Drehwinkels α berechnen.

Alle beschriebenen Bildauswertalgorithmen und Parameterberechnungen werden mit einem Rechner nach der Kamerabildaufnahme ausgeführt. Die Ergebnisse können in einem Protokoll dokumentiert werden. Mit dieser Vorgehensweise ist eine schnelle und automatische Makrodrallkontrolle selbst in der Fertigung erstmals realisierbar.

Ein weiterer Vorteil vorliegender Erfindung besteht in Folgendem: Anhand der 360°-Gesamtstreulichtverteilung kann zusätzlich getestet werden, welches Bearbeitungsverfahren zur Herstellung der Oberfläche eingesetzt wurde. Dazu werden die 1-dimensionalen Fouriertransformierten aller Bildzeilen der 360° Gesamtstreulichtverteilung berechnet und in einem 2-dimensionalen Frequenzverteilungsbild abgelegt. Wie bei der Ermittlung der Gängigkeit für die Beugungsordnungen kommen nun die Modulationen der Gesamtstreulichtverteilung zur Abbildung. Für jeden Streuwinkel φ der 360° Gesamtstreulichtverteilung wird das Welligkeitsspektrum mit Hilfe der Fouriertransformation berechnet und abgebildet. Es entsteht eine 2-dimensionale Frequenzverteilung, die charakteristische herstellungsbedingte Wellenzahlverteilungen in der Ebene aufzeigt. Für eine im Einstichschleifen hergestellte Oberfläche bilden sich Frequenzbänder in Umfangsrichtung aus. Für eine im Vorschub geschliffene oder gedrehte Oberfläche entstehen bevorzugt axiale Frequenzbänder. Eine oszillierend geschliffene bzw. im Pendelschleifen hergestellte Oberfläche zeigt geneigte Frequenzbänder, die ein Trapezmuster bilden. Ein stark stochastisches Verfahren, wie das Bürstenschleifen oder Finishen, führt zu einer ebenfalls stochastischen Anordnung der Fourierkomponenten. Figur 7 verdeutlicht schematisch die Anordnung von dominanten Fourierkomponenten einer erfindungsgemäß gewonnenen Gesamtstreulichtverteilung nach eindimensionaler Fouriertransformation in Umfangsrichtung für a) Einstichschleifen, b) Vorschubschleifen, c) Pendelschleifen und d) Bürsten. So ist es mit Hilfe des erfindungsgemäßen Verfahrens möglich, zusätzlich zur Makrodrallbestimmung das Herstellungsverfahren der geschliffenen Oberfläche zu prüfen und Verfahren, die automatisch zu einer Drallstruktur führen (Vorschubschleifen und Pendelschleifen) anzuzeigen. Somit kann für eine Eingangskontrolle sehr schnell und einfach die normgerechte Bearbeitung von Dichtungsgegenlaufflächen überprüft werden.

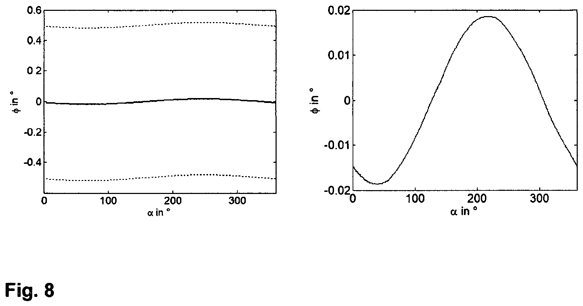

Ein weiterer Vorzug des vorgeschlagenen Verfahrens ist, dass die Prüfwellen hinsichtlich ihrer Zentrierung und Nivellierung nicht den hochgenauen Anforderungen entsprechen müssen, wie diese bei einer profilometrischen Messung notwendig sind. Ein Höhenschlag von <50μm sowie Exzentrizitäten bis zu 100μm sind nach dem erfindungsgemäßen Verfahren softwaremäßig kompensierbar. Besitzt die Prüfwelle durch Spannfehler einen Kippwinkel zur Rotationsachse, so ist die Gesamtstreulichtverteilung bei einer geschlossenen Umdrehung α =360° durch eine Periode einer sinusförmige Auslenkungen des Lichts in φ-Richtung gestört. Diese Auslenkung lässt sich am einfachsten beim Verlauf der intensitätsstarken Reflexionslinie nachweisen. Figur 8 zeigt als inversen Grauwertplot den Verlauf der Reflexionsgradlinie für eine zusammengesetzte Gesamtstreulichtverteilung mit Taumel (linke Bildseite). Erfasst man in Abhängigkeit von α den Ort des Maximums φ der Reflexion, so erhält man die Kurve, wie sie in Figur 8 auf der rechten Seite dargestellt ist. Von dieser wird die Auslenkamplitude und Phasenlage in Abhängigkeit vom Drehwinkel α berechnet. Diese Kurve ermöglicht erfindungsgemäß eine Enttaumelung der Gesamtstreulichtverteilung, indem die Kurve (in Figur 8 linke Seite) als Interpolationspfad verwendet wird. Alle Intensitätswerte die auf dieser Kurve liegen, entsprechen einem festen Winkel φ. Durch Verschieben der Kurve in φ-Richtung wird nun die Gesamtstreulichtverteilung für jeden φ-Wert enttaumelt, wobei die Kurve die Stützstellen für die 2-dimensionale Interpolation der Gesamtstreulichtverteilung vorgibt. Im Gegensatz zum Verfahren der Streulichtbildüberlagerung kommt es zu einer kontrastscharfen Bildentzerrung, die das langwellige Verhalten der Taumelkurve berücksichtigt (Subpixelinterpolation).

Bezugszeichenliste

| 1 | - Laser |
|---|---|
| 2 | - Lichtstrahl |
| 3 | - zylindrisches Werkstück / Welle |
| 4 | - reflektiert gestreutes Licht |
| 4.1, 4.2 | - Beugungsordnungen |
| 5 | - CCD-Array / Kamera |
| 6.1-6.5 | - Gänge |
| 7 | - Messbahn |

**Patentansprüche**

1. Verfahren zur optischen Makrodrallbestimmung an zylindrischen Werkstücken mit Hilfe von Streulichtmessungen, wobei das Werkstück (3) in einem vorgebbaren Oberflächenbereich senkrecht zur Rotationsachse streifend mit einem Lichtstrahl (2) beleuchtet wird und die reflektierten Beugungsbilder, einem definiert vorgebbaren Drehwinkelschritt (Δα) des Werkstücks zugeordnet, von einem 2-dimensionalen CCD-Array (5) erfasst und abgespeichert werden, **dadurch gekennzeichnet, dass** anschließend alle derart gewonnen einzelnen, benachbarten Streulichtbilder aneinander gereiht zu einer 360°-Gesamtstreulichtverteilung panoramaartig mustergetreu zusammengesetzt werden, wobei bei Vorhandensein eines Dralls ein die Welle umfassendes Beugungsbild entsteht, welches alle Ausgangsinformationen für Periodenlänge, Drallgängigkeit, Drallwinkel und Dralltiefe beinhaltet, welche zu deren Bestimmung derart ausgewertet und verarbeitet werden, dass aus den Intensitäten, die sich aus der Summation aller Zeilenelemente der Einzelbilder ergeben, die Intensitätsmaxima ermittelt werden und aus deren Abstand mittels der Beugungsgleichung

$$DP = \frac{m\lambda}{\sin\Theta_i \tan\varphi_m}$$

die Periodenlänge (DP) der Drallstruktur bestimmt wird, wobei $\lambda$ für die die Wellenlänge des einfallenden Lichts, $\Theta_i$ dem Einfallswinkel, m für die Beugungsordnung und $\varphi_m$ für den Azimutwinkel der Beugungsmaxima stehen, welchen sich definierte Bildzeilen der panoramaartigen Gesamtstreulichtverteilung zuordnen lassen und anschließend die Periodizität der Intensitätsverteilung in der 1. Beugungsordnung bestimmt wird, welche ein direktes Maß für die Gängigkeit (G) der Drallstruktur liefern und mit dieser Zahl und der bestimmten Periodenlänge (DP) gemäß

$$DW = a\tan\left(\frac{DP * G}{D * \pi}\right)$$

der Drallwinkel (DW) mit D als dem Durchmesser des zylindrischen Werkstücks (3) berechnet wird.

2. Verfahren nach Anspruch 1, **dadurch gekennzeichnet, dass** die Gängigkeit (G) derart ermittelt wird, dass für die Intensitätsverteilungen der 1. Beugungsordnungen, als Funktion des Drehwinkels $\alpha$, die Fouriertransformierten gebildet werden, welche bei periodischer Modulierung jeweils ein Maximum aufweisen, dessen Lage die Wellenzahl in Umfangsrichtung und somit die Gängigkeit der Drallstruktur angibt.

3. Verfahren nach Anspruch 1, **dadurch gekennzeichnet, dass** jeweils benachbarte Streulichtbilder innerhalb der 360°-Gesamtstreulichtverteilung einander überlappend so positioniert und abgespeichert werden, dass in überlappenden Bildbereichen in beiden Bildern vorhandene identische Streulichtmuster deckungsgleich übereinander positioniert werden.

4. Verfahren nach Anspruch 3, **dadurch gekennzeichnet, dass** die definierte Positionierung der benachbarten Streulichtbildbereiche in zwei Ebenen vorgenommen wird, wenn das zylindrische Werkstück während der 360°-Erfassung einen Taumel aufweist.

5. Verfahren nach einem der vorstehenden Ansprüche, **dadurch gekennzeichnet, dass** die Drehwinkelschrittweite $\Delta\alpha$ zur Erfassung eines einzelnen Streulichtbildes kleiner/gleich der halben Kameraapertur, respektive der Apertur des CCD-Arrays gewählt wird und der beleuchtete Oberflächenbereich nach einer weiteren Winkeldrehung um $\Delta\alpha$ an den vorangegangenen beleuchteten Oberflächenbereich direkt anschließt oder diesen überlappt.

## Claims

1. A method for optical macro-twist determination on cylindrical workpieces using scattered light measurements, wherein the workpiece (3) is illuminated in a skimming manner with a light beam (2) in a predeterminable surface region perpendicularly to the rotation axis and the reflected diffraction images, assigned to a specific predeterminable rotational angle step ($\Delta\alpha$) of the workpiece, are captured by a 2-dimensional CCD array (5) and are stored, **characterised in that** all the individual adjacent scattered light images obtained in this way are compiled in sequence to form a 360° total scattered light distribution, wherein, should a twist be present, a diffraction image comprising the shaft is created which contains all the initial information for period length, twist direction and pitch, twist angle and twist depth and which is evaluated and processed to determine these in a way that the intensity maxima are determined from the intensities resulting from the summation of all line elements of the individual images and the period length (DP) of the twist structure is determined from their interval using the diffraction equation

$$DP = \frac{m\lambda}{\sin\Theta_i \tan\varphi_m}$$

where $\lambda$ is the wavelength of the incident light, $\Theta_i$ is the angle of incidence, m is the diffraction order and $\varphi_m$ is the azimuth angle of the diffraction maxima, which can be assigned to defined image lines of the panoramic total scattered light distribution, and subsequently the periodicity of the intensity distribution in the 1st diffraction order is determined, which is a direct measure of the twist direction and pitch (G) of the twisted structure, and using this number and the determined period length (DP)

$$DW = a\tan\left(\frac{DP*G}{D*\pi}\right),$$

the twist angle (DW) is calculated, D being the diameter of the cylindrical workpiece (3).

2. The method according to claim 1, **characterised in that** the twist direction and pitch (G) are determined such that, for the intensity distributions of the 1st diffraction orders, the Fourier transforms are formed as a function of the twist angle $\alpha$, which each exhibit a maximum when periodically modulated, the position of which maximum indicates the wave number in the circumferential direction and thus the twist direction and pitch of the twist structure.

3. The method according to claim 1, **characterised in that** adjacent scattered light images within the 360° total scattered light distribution are positioned in an overlapping manner and stored such that identical scattered light patterns in overlapping image regions are congruently superimposed.

4. The method according to claim 3, **characterised in that** the defined positioning of adjacent scattered light image regions is done in two levels if the cylindrical workpiece exhibits wobbling during the 360° capture.

5. The method according to any of the preceding claims, **characterised in that** the rotational angle step $\Delta\alpha$ for capturing an individual scattered light image is selected to be smaller than or equal to half the camera aperture or the aperture of the CCD array and the illuminated surface region directly adjoins or overlaps the previous illuminated surface region after a further angular rotation by $\Delta\alpha$.

## Revendications

1. Procédé pour la détermination optique d'une macrotorsion sur des pièces cylindriques à l'aide de mesures de lumière diffuse, dans lequel la pièce (3) est éclairée de manière rasante par un rayon lumineux (2) dans une zone prédéterminable de la surface perpendiculairement à l'axe de rotation, et dans lequel les images de diffraction réfléchies, associées à un pas d'angle de rotation ($\Delta\alpha$) spécifique prédéterminable de la pièce, sont détectées par un réseau de DCC (5) à 2 dimensions et enregistrées, **caractérisé en ce que**, ensuite, toutes les images de lumière diffuse adjacentes individuelles ainsi obtenues, s'enchaînant, sont assemblées conformément au motif, en panorama afin d'obtenir une répartition totale de lumière diffuse sur 360°, la présence d'une torsion provoquant une image de diffraction comprenant l'arbre, laquelle comporte toutes les informations de départ pour la longueur de la période, la direction et le pas de la torsion, l'angle de torsion et la profondeur de torsion, lesquelles informations sont évaluées et traitées, afin de déterminer ceux-là de manière à ce que les maximums d'intensité soient déterminés à partir des intensités qui résultent de la sommation de toutes les éléments des lignes des images individuelles, et à ce qu'à partir de leur intervalle, la longueur de la période (DP) de la structure torsionnelle soit déterminée au moyen de l'équation de la diffraction

$$DP = \frac{m\lambda}{\sin\Theta_i \tan\varphi_m}$$

où $\lambda$ est la longueur d'onde de la lumière incidente, $\Theta_i$ l'angle d'incidence, m l'ordre de diffraction et $\varphi_m$ l'angle azimutal des maximums de diffraction, auxquels des lignes d'images définies de la répartition totale de lumière diffuse en panorama peuvent être associées, et par la suite, la périodicité de la répartition de l'intensité au 1er ordre de diffraction soit déterminée, laquelle fournit une mesure directe pour les pas de la torsion (G) de la structure torsionnelle, et au moyen de ce nombre et selon la longueur de période (DP) déterminée,

$$DW = a\tan\left(\frac{DP*G}{D*\pi}\right)$$

l'angle de torsion (DW) soit calculé, D étant le diamètre de la pièce cylindrique (3).

2. Procédé selon la revendication 1, **caractérisé en ce que** la direction et le pas de la torsion (G) sont déterminés de manière à ce que, pour les répartitions de l'intensité des 1ers ordres de diffraction, les transformées de Fourier soient formées comme fonction de l'angle de rotation $\alpha$, lesquelles transformées, modulées périodiquement, présentent chacune un maximum dont la position indique le nombre des ondulations dans la direction circonférentielle et, par là, la direction et le pas de la torsion de la structure torsionnelle.

3. Procédé selon la revendication 1, **caractérisé en ce que** des images de lumière diffuse adjacentes dans la répartition totale de lumière diffuse sur 360° sont positionnées en se chevauchant et enregistrées de manière à ce que, dans les zones de chevauchement des images, les motifs de lumière diffuse présents dans les deux images soient superposés en congruence.

4. Procédé selon la revendication 3, **caractérisé en ce que** le positionnement défini des zones adjacentes des images de lumière diffuse est effectué dans deux plans si la pièce présente un vacillement pendant la saisie sur 360°.

5. Procédé selon l'une des revendications précédentes, **caractérisé en ce que** la taille du pas de l'angle de rotation $\Delta\alpha$ pour la saisie d'une image de lumière diffuse individuelle est sélectionnée de façon à être inférieure ou égale à la moitié de l'ouverture de la caméra ou de l'ouverture du réseau DCC et, après une autre rotation angulaire de $\Delta\alpha$, la zone éclairée de la surface suit directement la zone éclairée de la surface précédente ou la chevauche.

Fig. 1

Fig. 2

**Fig. 3**

I(Bild1)

I(Bild2)

(I(Bild1)+I(Bild2))/2

**Fig. 4**

22- gängig

$\Sigma I(\alpha)$

+3.
+2.
+1.
0.
-1.
-2.
-3.

0°

$\varphi$

$\alpha$

0° 360°

**Fig. 5**

6.1
6.2
6.3
6.4
6.5

DW*i*

$\alpha$ in °

0 360

3

7

**Fig. 6**

Fig. 6a

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19740141 C1
- EP 2383541 A1
- DE 10027439 B4
- DE 10050203 C1
- WO 0022377 A1
- DE 10027449 A1

**In der Beschreibung aufgeführte Nicht-Patentliteratur**

- **MERCEDES BENZ.** *Werksnorm MBN 31007-7,* April 2009
- **HERTZSCH,A. ; KRÖGER,K. ; GROßMANN,M.** *Schnelle optische Drallmessung.,* Dezember 2013, 429-434
- **MERCEDES BENZ.** *Werksnorm MBN,* 31007-7
- Light scattering from periodic surfaces and turned surface roughness measurement. **Y. FAN.** Ph.D. dissertation. University of Windsor, 1992